# EUROPÄISCHE PATENTANMELDUNG

(11) **EP 2 885 958 A1**
(43) Veröffentlichungstag der Anmeldung: **24.06.2015**
(21) Anmeldenummer: 15150870.2
(22) Anmeldetag: 23.08.2013
(51) Int. Cl.: A01B 3/42, A01B 15/04

(54) **Drehpflug**

(30) Priorität: 05.09.2012 DE 102012108236
(62) Teilanmeldung aus: 13401092.5
(71) Anmelder: Amazonen-Werke H. Dreyer GmbH & Co. KG, 49205 Hasbergen (DE)
(72) Erfinder: Resch, Rainer, Dr., 49170 Hagen a TW (DE); Laumann, Bernhard, 48477 Hörstel-Riesenbeck (DE)

(57) **Zusammenfassung**

Die Erfindung bezieht sich auf einen Drehpflug (1) mit einem an einem Anbaubock zur Verbindung des Drehpfluges (1) mit einem landwirtschaftlichen Zugfahrzeug dreh- und/oder schwenkbar befestigbaren Pflugrahmen (2) und mit auf gegenüberliegenden Seiten des Pflugrahmens (2) angeordneten Pflugscharreihen (4, 5) mit Pflugkörpern (6), wobei durch eine über eine Antriebsvorrichtung eingeleitete Drehbewegung des Pflugrahmens (2) wahlweise die eine oder die andere Pflugscharreihe (4, 5) in ihre Betriebsstellung oder in ihre Außerbetriebsstellung überführbar ist und wobei die Pflugkörper (6) über Pflugkörperhalterungen (7) an dem Pflugrahmen befestigt sind, so dass die Pflugkörperhalterung (7) eines Pflugkörpers (6) nur an einer Seitenwand oder nur an zwei Seitenwänden des Pflugrahmens (2) in Bezug auf seine Arbeitsstellung befestigt ist, wobei die Pflugkörperhalterung (7) und/oder der Pflugrahmen (2) zumindest ein Ansatzelement (17) aufweist, das formschlüssig in eine komplementär ausgebildete Ausnehmung des Pflugrahmens (2) bzw. der Pflugkörperhalterung (7) eingreift, das in eine im Wesentlichen kongruent ausgebildete Ausnehmung eines Pflugteils in den Pflugrahmen einsetzbar ist, wobei die Pflugkörperhalterung (7) und/oder der Pflugrahmen (2) zumindest ein Ansatzelement (17) aufweist, das formschlüssig in eine komplementär ausgebildete Ausnehmung des Pflugrahmens (2) bzw. der Pflugkörperhalterung (7) eingreift.

## Beschreibung

Die Erfindung bezieht sich auf einen Drehpflug mit einem an einem Anbaubock zur Verbindung des Drehpfluges mit einem landwirtschaftlichen Zugfahrzeug dreh- und/oder schwenkbar befestigbaren Pflugrahmen und mit auf gegenüberliegenden Seiten des Pflugrahmens angeordneten Pflugscharreihen mit Pflugkörpern, wobei durch eine über eine Antriebsvorrichtung eingeleitete Drehbewegung des Pflugrahmens wahlweise die eine oder die andere Pflugscharreihe in ihre Betriebsstellung oder in ihre Außerbetriebsstellung überführbar ist und wobei die Pflugkörper über Pflugkörperhalterungen an dem Pflugrahmen befestigt sind.

Drehpflüge mit an gegenüberliegenden Seiten eines Pflugrahmens angeordneten Pflugscharreihen haben Pflugscharreihen, die auf der einer Seite rechtswendende Pflugkörper und auf der anderen Seite linkswendende Pflugkörper aufweisen, die jeweils wechselseitig bei einer Hinfahrt und bei einer Rückfahrt zum Einsatz kommen. Durch eine Antriebsvorrichtung, beispielsweise in Gestalt eines Drehzylinders, ist der Pflug in die jeweilige Arbeitsstellung zu überführen. Für eine Arbeitsbreiteneinstellung kann darüber hinaus der Drehpflug mit einer besonderen Vorrichtung ausgerüstet sein, um in der jeweiligen Arbeitsstellung die Pflugarbeitsbreite anpassen zu können.

Üblicherweise sind die Pflugkörperhalterungen an der Unter- und an der Oberseite des Pflugrahmens des Drehpfluges befestigt. Ein Beispiel dazu ist der aus der DE 197 18 988 A1 bekannte Pflug, bei dem die Pflugkörper über Klemmplatten am Pflugrahmen festzulegen sind. Die Klemmplatten bedecken dabei mit einander zugewandten Schenkeln die Ober- und Unterseite des Pflugrahmens und haben nach oben und unten gerichtete Befestigungsansätze, die über Schrauben und Muttern miteinander zu verspannen sind. Dadurch werden die Klemmkräfte auf den Pflugrahmen übertragen. Die abgewinkelten Schenkel mit ihren empor bzw. während der Arbeitsstellung des Pfluges zur Bodenoberfläche hin gerichteten Befestigungsansätzen sowie die Klemmschrauben beeinträchtigen den Raum oberhalb und unterhalb des Pflugrahmens während des Arbeitseinsatzes erheblich. Ein derartiger Pflug neigt daher zu Verstopfungen, die durch diese Pflugkörperhalterungen ausgelöst werden können.

Es ist Aufgabe der vorliegenden Erfindung, einen Drehpflug der eingangs genannten Art derart weiter zu bilden, dass Funktionsteile und deren Halterungen sicher an Verbindungselementen zu halten sind, insbesondere mit einem Pflugrahmen zu verbinden sind. Zur Lösung dieser Aufgabe zeichnet sich der Drehpflug der eingangs genannten Art durch die im kennzeichnenden Teil des Anspruchs 1 angegebenen Merkmale aus. Durch die Gestaltung des Ansatzelements gemäß Anspruch 1 lässt sich das Ansatzelement lageveränderlich in der entsprechenden Ausnehmung anordnen. Besonders bevorzugt wird, wenn das Halteteil des Anbaubockes zumindest ein Ansatzelement aufweist, das formschlüssig in eine komplementär ausgebildete Ausnehmung des Pflugrahmens eingreift. Alternativ kann ein derartiges Ansatzelement auch am Pflugrahmen vorgesehen sein, das in eine entsprechend komplementär ausgebildete Ausnehmung des Halteteils des Anbaubockes eingreift. Damit lassen sich montagespezifische Gegebenheiten in einfacher Weise berücksichtigen. Ebenfalls lassen sich Fertigungstoleranzen in einfacher Weise ausgleichen. Durch das Ansatzelement ist das anzubauende Teil wie beispielsweise die Pflugkörperhalterung oder ein Halterungsteil eines Anbaubockes an z.B. dem Pflugrahmen zu fixieren. Darüber hinaus ist das Ansatzelement geeignet, weitere Verbindungselemente wie beispielsweise Schraubverbindungselemente zu entlasten. Es können ein oder mehrere Ansatzelemente vorgesehen sein. Bevorzugter Maßen ist vorgesehen, dass der Anbaubock über ein Halteteil nur an einer Seitenwand oder nur an zwei Seitenwänden des Pflugrahmens in Bezug auf seine Arbeitsstellung befestigt ist

Besonders bevorzugt ist, wenn das Halteteil des Anbaubockes mit der einen Seitenwand oder mit zwei Seitenwänden des Pflugrahmens verschraubt wird. Letzteres kann dergestalt erfolgen, dass zumindest eine Schraube oder dergleichen Befestigungsmittel den Pflugrahmen durchsetzt, so dass das Halteteil des Anbaubockes an beiden Seitenwänden des Pflugrahmens angeschlossen ist, ohne dass sich das Halteteil in Bereichen oberhalb oder unterhalb des Pflugrahmens an dortige Wandungsteile anlegt.

Es ist ebenfalls möglich, zwei oder mehr Ansatzelemente an dem Halteteil des Anbaubockes vorzusehen bzw. umgekehrt am Pflugrahmen, die in entsprechende Ausnehmungen eingreifen. Durch dieses Ansatzelement ist zunächst das Halteteil des Anbaubockes am Pflugrahmen zu zentrieren und kann dann über weitere Befestigungselemente, beispielsweise über weitere Schrauben mit dem Pflugrahmen sicher verbunden werden. Durch den Formschluss eines entsprechenden Ansatzelementes in der komplementär ausgebildeten Ausnehmung ergibt sich eine sichere und die Schraubverbindung entlastende Anordnung des Halteteils des Anbaubockes an dem Pflugrahmen, die auch als Widerlager dient und mithin Stoßbelastungen sicher abfängt.

Eine entsprechende Ausbildung und Befestigung ist ebenfalls möglich mit der Pflugkörperhalterung. Auch diese kann sich nur an einer Seitenwand oder an zwei Seitenwänden des Pflugrahmens in Bezug auf seine Arbeitsstellung am Pflugrahmen anschließen, also bei einem üblichen Vierkantpflugrahmen an den beiden Seitenwänden. Somit ist auch der Pflugrahmen in seiner Arbeitsstellung in seinen Bereichen oberhalb seiner oberen Wandung und unterhalb seiner unteren Wandung frei von Befestigungen und Befestigungsansätzen von Pflugkörperhalterungen, womit ein dadurch bedingtes Verstopfungs- und/oder Verschmutzungsrisiko vermindert ist. Die Pflugkörperhalterung kann in analoger Weise ausgebildet sein wie das Halterungsteil des Anbaubockes, also mit einem oder mehreren Ansatzelementen, wie vorbeschrieben und wie in den Ansprüchen angegeben. Das Ansatzelement kann beispielsweise dergestalt ausgebildet sein, dass es ein bewegliches Teil aufweist mit beispielsweise einem endseitigen Konus, der in die Ausnehmung an dem Halterungsteil an Pflugrahmen und/oder der Pflugkörperhalterung eingreift. Damit ist dieses lageveränderlich an der Ausnehmung vorzusehen. Dazu kann beispielsweise eine Art Schraube vorgesehen sein mit einer Mutter, die in ein entsprechendes Gewinde eines Buchsenteils eingreift.

An der Pflugkörperhalterung, insbesondere wenn sie seitlich an dem Pflugrahmen vorgesehen ist, kann sich in besonders vorteilhafter Weise auch eine Vorrichtung zur Einstellung der Pflugarbeitsbreite anschließen, und zwar dergestalt, dass der Pflugkörper um eine im wesentlichen lotrechte Achse schwenkbar am Pflugrahmen über einen eine Ausnehmung des Pflugrahmens durchsetzende Hebel verstellbar ist. Der die Ausnehmung des Pflugrahmens durchsetzende Hebel kann seinerseits beweglich mit zumindest einem Teil der Pflugkörperhalterung verbunden sein. Dazu kann die Pflugkörperhalterung zwei- und mehrteilig ausgebildet sein, beispielsweise mit einem Pflugkörperhalteteil, das - wie vor erwähnt - seitlich an dem Pflugrahmen mit Schrauben und einem formschlüssig in eine Ausnehmung angreifenden Ansatz befestigt ist. An diesem Pflugkörperhalteteil können z.B. Konsolen befestigt werden, zwischen denen eine lotrechte Achse definiert ist, so dass die Konsolen, an denen ein Pflugkörper zu befestigen ist, relativ zu dem an dem Pflugrahmen befestigten Pflugkörperhalteteil bewegt werden können. Das seitlich an den Pflugrahmen angebundene Pflugrahmenhalteteil kann seinerseits eine Ausnehmung, beispielsweise eine schlitzförmige Ausnehmung haben, die zu der Ausnehmung, im Pflugrahmen fluchtet, so dass der Hebel zur Verstellung der Arbeitsbreite nicht nur den Pflugrahmen sondern auch das Pflugrahmenhalteteil durchsetzen kann.

Durch die bewegliche Verbindung des Hebels mit der Pflugkörperhalterung, insbesondere durch die schwenkbewegliche Verbindung und die Verschwenkbarkeit um eine im wesentlichen horitzontale Achse, können weiterhin wirksam Stöße aufgefangen werden, um die Verschleißanfälligkeit des Pfluges weiter zu vermindern. Weitere Vorteile und Ausgestaltungen der Erfindung ergeben sich aus weiteren Unteransprüchen, der nachstehenden Beschreibung und der Zeichnung. In der Zeichnung zeigen:
- Fig. 1: eine schematische Seitenansicht auf ein Ausführungsbeispiel eines Drehpfluges nach der Erfindung;
- Fig. 2: ausschnittsweise in perspektivischer Darstellung einen Teilbereich des Pflugrahmens mit angedeuteter Pflugschar;
- Fig. 3: eine zu Fig. 2 analoge Darstellung aus einer anderen mehr von oben ausgerichteten Perspektive;
- Fig. 4: ein Teilausschnitt einer perspektivischen Darstellung auf den Pflugrahmen mit Pflugkörperhalterung (ohne Pflugschar);
- Fig. 5: eine perspektivische Darstellung schräg von oben auf das Ausführungsbeispiel nach Fig. 4 mit angedeutetem Pflugschar;
- Fig. 6: eine zu Fig. 5 analoge Darstellung,
- Fig. 7: eine Darstellung eines Teilbereich des Pflugrahmens in einer Ansicht schräg von oben;
- Fig. 8: eine Seitenansicht auf die Pflugkörperhalterung von der dem Pflugschar abgewandten Seite;
- Fig. 9: einen Teilausschnitt einer perspektivischen Darstellung eines Ausführungsbeispiels auf einen Drehpflug im Bereich der Anbindung des Pflugrahmens an dem Anbaubock für die Verbindung mit einem landwirtschaftlichen Zugfahrzeug;
- Fig. 10: vergrößert den Bereich des seitlich am Pflugrahmen angebauten Halterungsteiles des Anbaubockes;
- Fig. 11: eine zu Fig. 10 analoge Dastellung des Anbauteiles des Ausführungsbeispiels nach den Fig. 9 und 10 vor der Montage;
- Fig. 12: eine zu Fig. 11 analoge Darstellung von der gegenüberliegenden Seite betrachtet vor der Montage an dem Pflugrahmen, und
- Fig. 13: ein Ausführungsbeispiel eines verstellbar ausgebildeten Ansatzelements des Halterungsteiles oder des Pflugkörperhalteteils, das in eine entsprechende Ausnehmung innerhalb des Pflugrahmens einzusetzen ist.

In der Zeichnung sind grundsätzlich übereinstimmende Teile mit übereinstimmenden Bezugsziffern versehen.

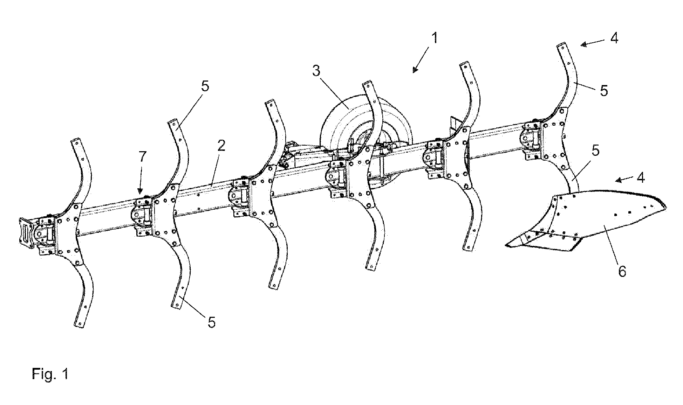

In Fig. 1 ist ein Ausführungsbeispiel eines allgemein mit 1 bezifferten Drehpfluges gezeigt, der über eine nicht im Einzelnen dargestellten Anbaubock an einen ebenfalls nicht im Einzelnen näher dargestellten landwirtschaftlichen Schlepper anhängbar ist und der einen Pflugrahmen 2 aufweist, der über ein Stützrad 3 auf dem Erdboden abzustützen ist. Der Pflugrahmen 2 trägt allgemein mit 4 bezifferte gegenüberliegende Pflugscharreihen mit am Pflugarmen 5 angeordneten Pflugkörpern 6, die gegenüberliegend an den Pflugrahmen 2 angeordnet sind. In dem Ausführungsbeispiel nach Fig. 1 ist nur ein Pflugkörper 6 angedeutet.

In der Darstellung nach Fig. 1 sind die unteren Pflugkörper 6 einer Pflugscharreihe 4 in der Arbeitsstellung. Durch eine Bewegung um 180° kann der Pflugrahmen 2 gedreht werden, so dass die gegenüberliegende Pflugscharreihe 4 mit daran montierten Pflugkörpern 6 in die Arbeitsstellung gelangen. Die dazu erforderlichen Teile wie Drehwelle, Zylindereinheiten sind aus Gründen der besseren Übersichtlichkeit nicht dargestellt.

Die Pflugkörper 6 und mithin die Pflugscharreihen 4 sind über die Pflugarme 5 an einer allgemein mit 7 bezifferten Pflugkörperhalterung an dem Pflugrahmen 2 befestigt. Wie im Einzelnen anhand weiterer Figuren noch dargestellt wird, ist die Pflugkörperhalterung 7 bei dem gezeigten Ausführungsbeispiel mehrteilig ausgebildet, und zwar dergestalt, dass sie den oberen Bereich des Pflugrahmens 2 genauso wie den unteren Bereich des Pflugrahmens 2 freilässt und sich nur an seitlichen in Fig. 1 dem Betrachter zugewandten Bereichen des Pflugrahmens 2 anschließt. Damit gehen im Alltagsbetrieb erhebliche Vorteile einher, da insbesondere die Pflugrahmenoberseite frei von Anbauten gestaltet ist mit erheblichen Vorteilen im rauhen Alltagseinsatz.

Wie im Einzelnen noch näher erläutert werden wird, sind die Pflugarme 5 mit den Pflugkörpern 6 um eine lotrechte Achse verschwenkbar und auch hinsichtlich ihrer Arbeitsbreite zu verstellen. Dies wird anhand der weiteren Darstellungen näher erläutert werden.

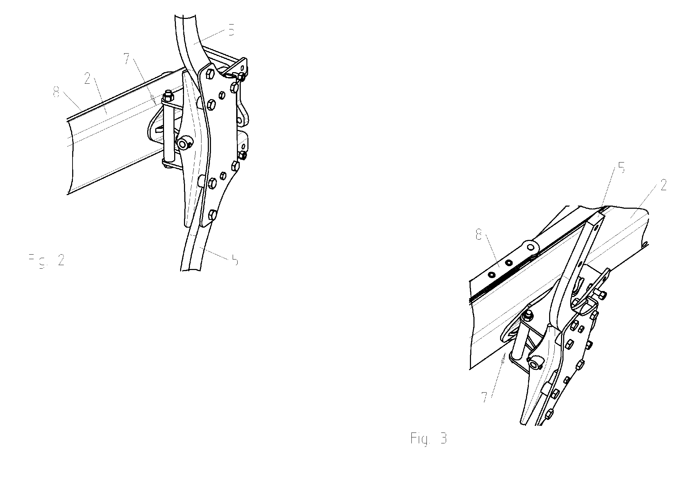

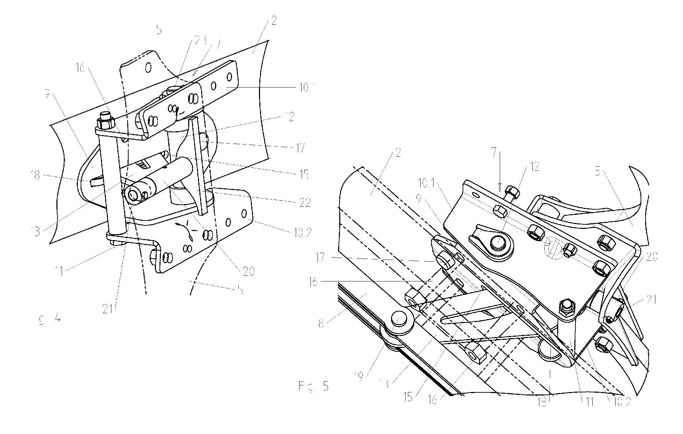

Wie die Fig. 2 und 3 zeigen, sind die Pflugkörper 6 und damit die Pflugscharreihen 4 und 5 über die Pflugkörperhalterung 7 an dem Pflugrahmen 2 befestigt. Fig. 3 zeigt, dass eine Verstellstange 8 seitlich neben dem Pflugrahmen 2 vorgesehen ist, um mithilfe von nicht gezeigten Stellzylindern die Arbeitsbreite des Pfluges 1 über eine Verstellung und damit um eine Verschwenkung der Pflugscharreihen 4 mit angeordneten Pflugkörpern 6 einzustellen. Die Pflugscharreihen bzw. die entsprechenden Halter 7 der Pflugkörper 6 sind über eine Befestigungsplatte mit der Pflugkörperhalterung 7 verschraubt. Die entsprechenden Teile sind näher aus den Fig. 4, 5 und 6 ersichtlich. Die Pflugkörperhalterung 7 besteht in dem dargestellten Ausführungsbeispiel aus mehreren Teilen, nämlich zunächst dem Pflugkörperhalteteil 9 und zwei mit Abstand zueinander angeordneten Konsolen 10.1 und 10.2, wobei 10.1 die obere Konsole und 10.2 die untere Konsole beziffert. Diese sind gegensinnig abgewinkelt, um dort über Schrauben, die in entsprechende Schraublöcher einzuführen sind, die Befestigungsplatte der Pflugarme 5 der Pflugschare 6anzubinden. Die Konsolen 10.1 und 10.2 sind über eine Schraube 11 und über eine Bolzenhülsenbefestigung 12 miteinander verbunden. Die Bolzenhülsenbefestigung 12 definiert darüber hinaus eine lotrechte Achse, über die die Konsolen mit adaptierten Pflugscharen 4 und 5 relativ zu dem Pflugrahmen 2 zur Verstellung der Arbeitsbreite innerhalb eines vorgegebenen Schwenkweges zu verschwenken sind.

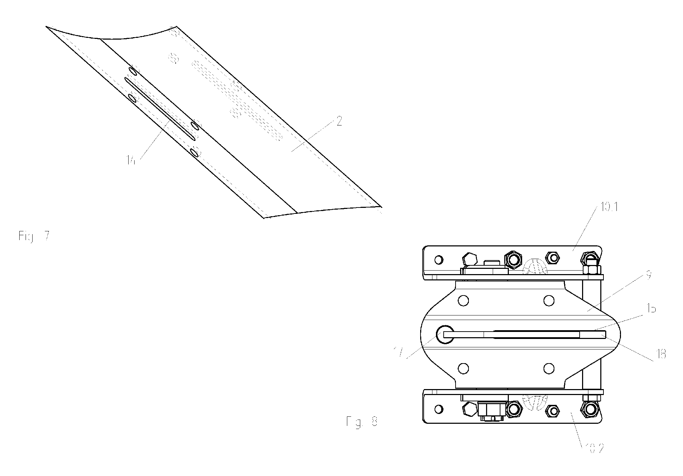

Dazu ist ein Hebel 13 vorgesehen, der eine Ausnehmung 14 (Fig. 7) durchsetzt. Des Weiteren ist in dem Pflugkörperhalteteil 9 ebenfalls eine Ausnehmung 15 vorgesehen, die von dem Hebel 13 ebenfalls durchsetzt ist. Wie aus Fig. 5 ersichtlich ist, ist der Hebel 13 gelenkig mit der Verstellstange 8 verbunden. Das Pflugkörperhalteteil 9 hat eine im Querschnitt im Wesentlichen U-förmige Gestalt und ist mit dem Pflugrahmenteil 2 verbunden, und zwar über Schrauben 16. Des Weiteren hat das Pflugkörperhalteteil 9 noch Vorsprünge 17 und 18, die in eine entsprechende Ausnehmung innerhalb des Pflugrahmens 2 und/oder die Ausnehmung 14 am Pflugrahmen 2 eingreifen, um ein Widerlager darzubieten, so dass das Pflugkörperhalteteil 9 nicht nur über die Schrauben 16 an dem Pflugrahmen 2 gesichert ist. Alternativ können auch am Pflugrahmen 2 entsprechende Vorsprünge vorgesehen sein, um in entsprechende Ausnehmungen am Pflugkörperhalteteil 9 einzugreifen.

In besonders vorteilhafter Weise ist der Hebel 13 beweglich mit der Bolzenhülseneinheit 2 und somit mit dem gegenüber den Pflugrahmen 2 verschwenkbaren Teil der Pflugkörperhalterung 7 verbunden, die durch die Konsolen 10.1 und 10.2 gebildet sind. Dazu ist der Hebel 13 an seiner der Gelenkstelle 19 an dem Verstellhebel 8 abgewandten Ende mit der im Wesentlichen horizontal ausgerichtete Achse 21 verbunden. Dieser Gelenkbolzen ist in einer Gelenkhülse angeordnet, die mit dem Bolzen/Hülsenteil 12 über einen Flansch 22 verbunden ist, so dass über den Hebel 13 die Verstellung der Konsolen 10.1 und 10.2 mitsamt der Gelenkbolzen-/Hülseneinheit 20 zu vollziehen ist, womit die Pflugscharreihen 4 und damit die Pflugarme 5 mit den die Pflugkörpern 6 zu verstellen sind.

Über die Achse 21 ist der Hebel 13 gegenüber der Pflugkörperhalterung 7 um die im Wesentlichen horizontal ausgerichtete Achse 23 beweglich und mithin auch gegenüber den die Pflugkörpern 6 tragenden Pflugarme 5. Gleichwohl ist der Hebel 13 innerhalb der Ausnehmung 14 bzw. der Ausnehmung 15 in dem Pflugkörperhalteteil 9 geführt, und zwar hinsichtlich der Anschläge, die sich links und rechts, bezogen auf die Darstellung nach Fig. 4 neben dem dargestellten Hebel 13 befinden, aber auch nach oben und unten, so dass die jeweilige Ausnehmung 14 am Pflugrahmen 2 bzw. die Ausnehmung 15 im Pflugkörperhalteteil 9 eine derartige Hocherstreckung hat, dass sich der Hebel 13 gegenüber der Pflugkörperhalterung 7 verschwenken und nach oben und unten bewegen lässt, jedoch nach einem bestimmten Schwenkweg nach oben und unten durch die jeweiligen Begrenzungswände der Ausnehmungen 14 und 15 auch wiederum Anschläge vorfindet, wodurch die Bewegung nach oben und unten hin begrenzt ist. So lassen sich Verspannungen in der beweglichen Verbindung zwischen dem Hebel 13 und der Pflugkörperhalterung 7 bzw. deren Teilen wirksam verhindern, was zu einem reparaturverminderten Betrieb des Drehpfluges führt.

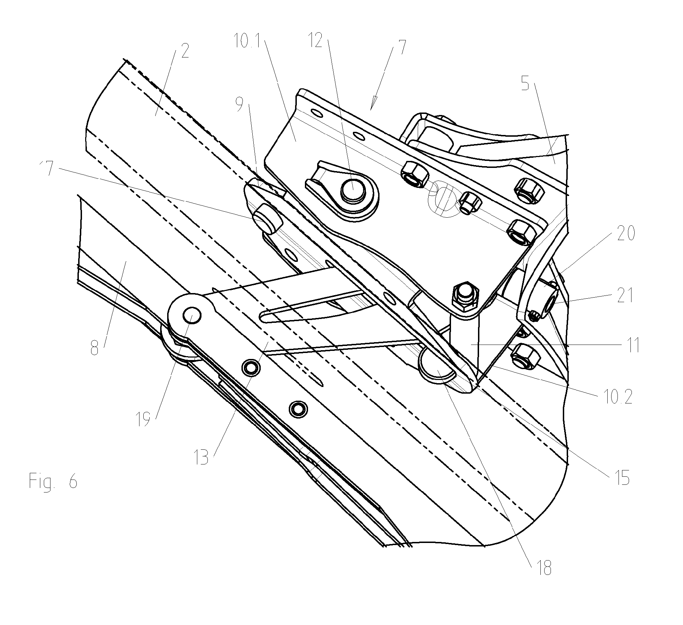

In den weiteren Darstellungen nach den Fig. 6, 7 und 8 sind die vorerwähnten Gestaltungsdetails in weiteren Ansichten noch näher dargestellt und mithin weiter verdeutlicht.

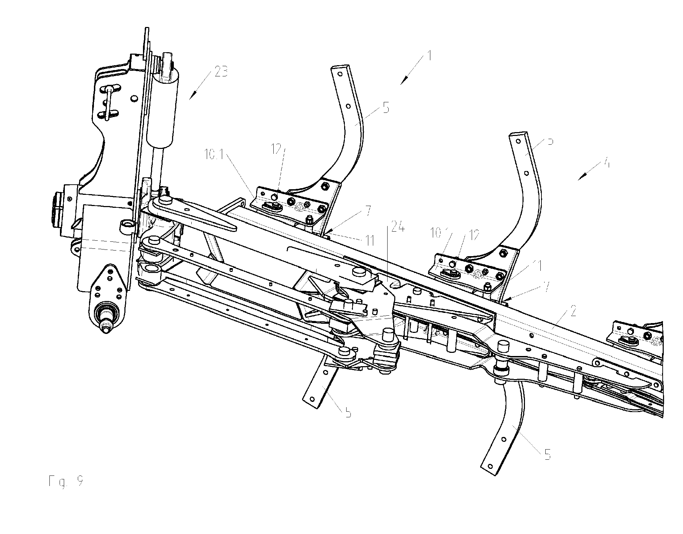

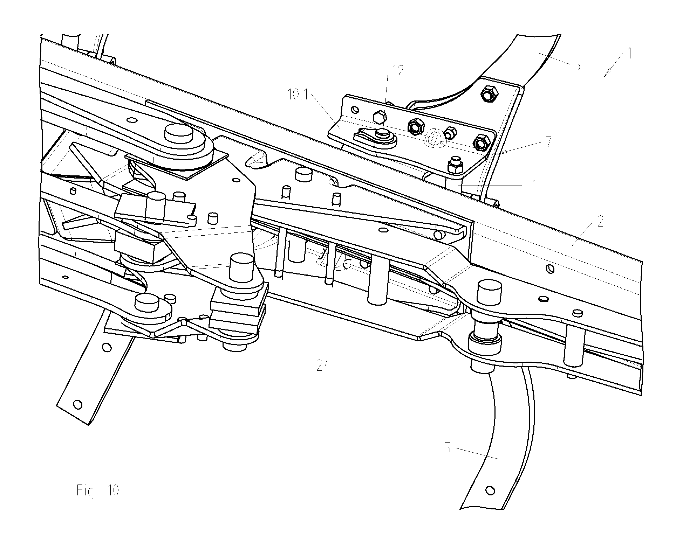

Neben den schon zuvor in den Figuren gezeigten Teilen der Pflugkörperhalterung 7 und der Pflugarme 5 der Pflugscharreihen 4 ist in den Fig. 9 bis 12 ein allgemein mit 23 bezifferter Anbaubock des Pfluges 1 gezeigt, der dazu dient, den Pflug 1 und damit den Pflugrahmen 2 mit einem landwirtschaftlichen Nutzfahrzeug, beispielsweise einem landwirtschaftlichen Schlepper, zu verbinden und dort z.B. einen Zapfwellenantrieb für die entsprechenden Dreh- und sonstigen Einstellungsbewegungen des Pfluges 1 anzubinden.

Der besseren Übersichtlichkeit wegen ist auf die nähere Gestaltung des Anbaubockes 23 an dieser Stelle verzichtet worden. Dieser soll jedoch technische Details aufweisen, die im Stand der Technik bekannt sind und mithin zahlreiche Vorbilder hat.

Wesentlich im Rahmen der vorliegenden Erfindung ist, dass dieser Anbaubock 23 ein Halterungsteil 24 hat, das auch wiederum an einer Seitenwandung des Pflugrahmens 2 angeflanscht ist, so dass die Ober- und Unterseite des als Vierkantrahmen ausgebildeten Pflugrahmens 2 frei von Anbauteilen auch von Verbindungsteilen des Pflugrahmens 2 ausgebildet ist. Da bereits die Pflughalterung 7 ebenfalls an einer Seitenwandung des Pflugrahmens 2 angebunden sind, ist somit insgesamt der Pflugrahmen 2 an seiner Ober- und an seiner Unterseite frei von jedweden Funktionsteilanbindungen, so dass etwaige dadurch bedingte und im Stand der Technik auftretende Verschmutzungen und Verstopfungsrisiken vermieden sind.

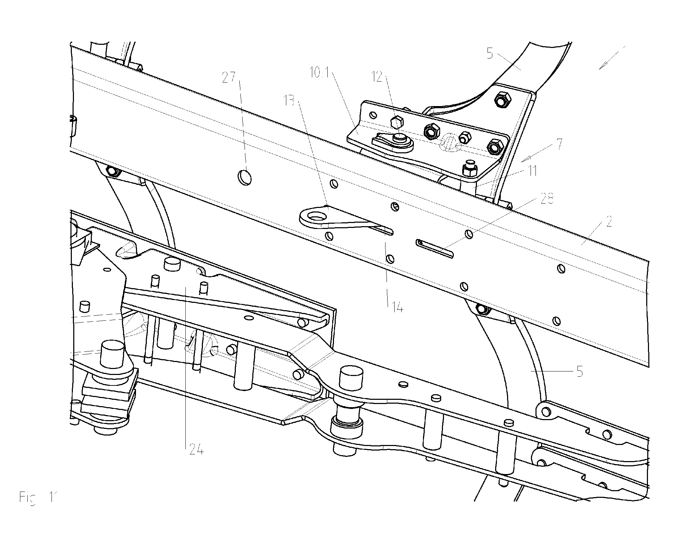

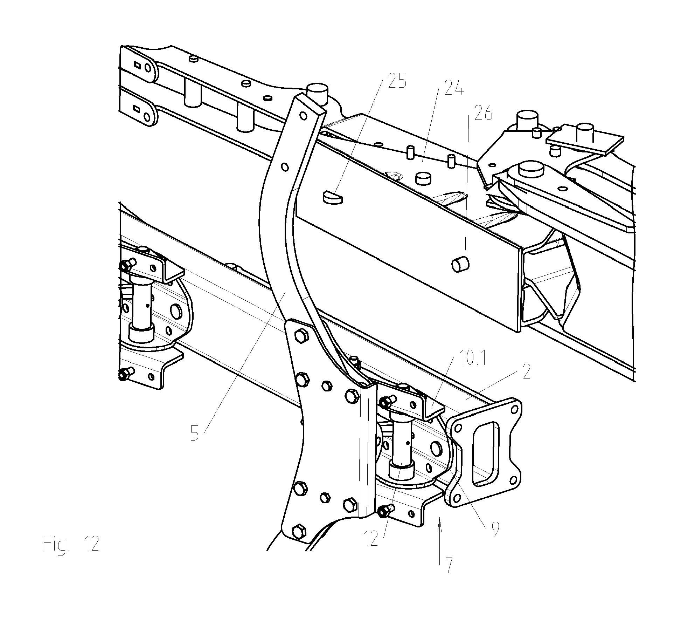

Das Halterungsteil 24 ist seinerseits mit einem oder mehreren Vorsprüngen bzw. Ansatzelementen 25 und 26 (Fig. 12) versehen, die in entsprechende Ausnehmungen 27 und 28 (Fig. 11) eingreifen können. Darüber hinaus ist das Halterungsteil 24 nach entsprechender Einführung der Vorsprünge 25 und 26 in die Ausnehmungen 27 und 28 am Pflugrahmen 28 über Schraubverbindungen oder dergleichen mit dem Pflugrahmen 2 verspannt. Durch die Ansatzelemente 25 und 26 lassen sich die entsprechenden Befestigungsverbindungen, also in aller Regel die Schraubverbindungen, wirksam entlasten.

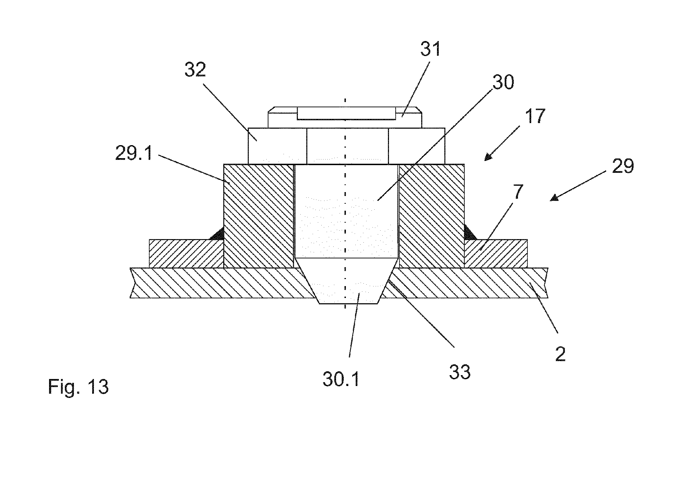

In Fig. 13 ist exemplarisch ein besonders gestaltetes Ansatzelement 29 gezeigt, das beispielsweise an dem Halterungsteil 24 oder aber auch an dem Pflugkörperhalteteil 27, vorgesehen sein kann. Exemplarisch ist dies dargestellt an dem Pflugkörperhalteteil 7. Das Pflugkörperhalteteil 7 ist mit Pflugrahmen 2 verbunden. Das Ansatzelement 29, das dem Ansatzelement 17 der Fig. 6 und 8 entsprechen soll, hat ein Buchsenteil 29.1, das ein Innengewinde aufweist, in das ein Schraubelement 30 mit einem Konusende 30.1 eingeschraubt ist, mit einem Fixierkonus 31 und einer Mutter 32. Somit ist das Schraubelement 30 lageveränderlich in der Ausnehmung 33 des Pflugrahmens gehalten, so dass der Vorsprung 29 bzw. 17 den individuellen Fertigungs- und Montageanforderungen durch eine Lageveränderung des Vorsprunges 30 individuell angepasst werden kann. So ist auch eine Vormontage und auch eine Endsicherung des Vorsprunges 17 bzw. 29 ermöglicht.

## Patentansprüche

1. Drehpflug (1) mit einem an einem Anbaubock zur Verbindung des Drehpfluges (1) mit einem landwirtschaftlichen Zugfahrzeug dreh- und/oder schwenkbar befestigbaren Pflugrahmen (2) und mit auf gegenüberliegenden Seiten des Pflugrahmens (2) angeordneten Pflugscharreihen (4, 5) mit Pflugkörpern (6), wobei durch eine über eine Antriebsvorrichtung eingeleitete Drehbewegung des Pflugrahmens (2) wahlweise die eine oder die andere Pflugscharreihe (4, 5) in ihre Betriebsstellung oder in ihre Außerbetriebsstellung überführbar ist und wobei die Pflugkörper (6) über Pflugkörperhalterungen (7) an dem Pflugrahmen befestigt sind, **dadurch gekennzeichnet, dass** die Pflugkörperhalterung (7) eines Pflugkörpers (6) nur an einer Seitenwand oder nur an zwei Seitenwänden des Pflugrahmens (2) in Bezug auf seine Arbeitsstellung befestigt ist, dass die Pflugkörperhalterung (7) und/oder der Pflugrahmen (2) zumindest ein Ansatzelement (17) aufweist, das formschlüssig in eine komplementär ausgebildete Ausnehmung des Pflugrahmens (2) bzw. der Pflugkörperhalterung (7) eingreift.

2. Drehpflug nach Anspruch 1, **dadurch gekennzeichnet, dass** die Pflugkörperhalterung (7) mit einer Seitenwand oder zwei Seitenwänden des Pflugrahmens (2) verschraubt ist.

3. Drehpflug nach einem der Ansprüche 1 bis 2, **dadurch gekennzeichnet, dass** zumindest zwei mit Abstand zueinander vorgesehene Ansatzelemente (17) an der Pflugkörperhalterung (7) und/oder an dem Pflugrahmen (2) vorgesehen sind, die in den Ansatzelementen (17) zugeordnete Ausnehmungen an dem Pflugrahmen (2) und/oder an der Pflugkörperhalterung (7) formschlüssig eingreifen.

4. Drehpflug nach Anspruch 1 , **dadurch gekennzeichnet, dass** das zumindest ein Ansatzelement (17) und die diesem zugeordnete Ausnehmung ein Widerlager für die Pflugkörperhalterung (7) ausbildet und zusätzlich zu dem Widerlager ein in den Pflugrahmen (2) eingreifendes Befestigungselement (16) vorgesehen ist.

5. Drehpflug nach Anspruch 4, **dadurch gekennzeichnet, dass** das zusätzlich zum Ansatzelement (17) vorgesehene Befestigungselement (16) durch eine Schraubverbindung gebildet wird.

6. Drehpflug nach einem der Ansprüche 1 bis 5 mit einer Vorrichtung zur Einstellung der Pflugarbeitsbreite in den jeweiligen Arbeitsstellungen, wobei die Pflugkörper (6) zur Einstellung der Pflugarbeitsbreite um eine im Wesentlichen lotrechte Achse schwenkbar am Pflugrahmen (2) und jeweils über einen eine Ausnehmung (14) des Pflugrahmens (2) durchsetzenden Hebel (13) verstellbar sind, **dadurch gekennzeichnet, dass** der die Ausnehmung (14) des Pflugrahmens (2) durchsetzende Hebel (13) beweglich mit zumindest einem Teil (10.1, 10.2) der Pflugkörperhalterung (7) verbunden ist.

7. Drehpflug nach Anspruch 6, **dadurch gekennzeichnet, dass** der Hebel um eine in der Arbeitsstellung des Pflugkörpers (6) im Wesentlichen horizontal ausgerichtete Achse (21) schwenkbar mit zumindest einem Teil (10.1, 10.2) der Pflugkörperhalterung (7) verbunden ist.

8. Drehpflug nach einem der Ansprüche 1 bis 7, **dadurch gekennzeichnet, dass** der die Ausnehmung (14) des Pflugrahmens (2) durchsetzende Hebel (13) um eine Achse (21) schwenkbar ist, die parallel oder annähernd parallel zu einer Seitenwandung des Pflugrahmens (2) ausgerichtet ist.

9. Drehpflug nach einem der Ansprüche 1 bis 8, **dadurch gekennzeichnet, dass** der Hebel (13) über einen die Achse (21) zwischen dem Hebel (13) und der Pflugkörperhalterung (7) aufweisenden Gelenkbolzen (20) mit der Pflugkörperhalterung (7) verbunden ist.

10. Drehpflug nach einem der Ansprüche 1 bis 9, **dadurch gekennzeichnet, dass** die Ausnehmung (14) innerhalb des Pflugrahmens (2) zur Anordnung des Hebels (13) eine die Bewegung des Hebels (13) um die in etwa horizontal ausgerichtete Achse (21) zulassende Hocherstreckung aufweist.

11. Drehpflug nach einem der Ansprüche 1 bis 10, **dadurch gekennzeichnet, dass** der die Ausnehmung (14) durchsetzende Hebel (13) mitsamt der Schwenkachse (21) derart mit der Pflugkörperhalterung (7) verbunden ist, dass die Achse (21) bei Einstellung der Pflugarbeitsbreite in der jeweiligen Arbeitsstellung eine Schwenkbewegung zumindest eines Teils der Pflugkörperhalterung (7) um die lotrechte Achse mitmacht.

12. Drehpflug nach einem der Ansprüche 1 bis 11, **dadurch gekennzeichnet, dass** die Pflugkörperhalterung (7) zwei mit Abstand zueinander angeordnete Konsolen (10.1, 10.2) aufweist, zwischen denen eine Hülse (12) mit Gelenkbolzen vorgesehen ist, die die lotrechte Achse zur Einstellung der Arbeitsbreite ausbilden, wobei ein Befestigungsteil (22) mit der Hülse (12) verbunden ist, an denen der Hebel (13) mit der im Wesentlichen horizontal ausgerichteten Achse (21) angreift.

13. Drehpflug nach einem der Ansprüche 1 bis 12, **dadurch gekennzeichnet, dass** an den beiden mit Abstand zueinander angeordneten Konsolen (10.1, 10.2) der Pflugkörperhalterung (7) der Pflugkörper (6) abgestützt ist. 14. Drehpflug nach Anspruch 13, **dadurch gekennzeichnet, dass** die beiden mit Abstand zueinander angeordneten Konsolen (10.1, 10.2) an einem Pflugkörperhalteteil (9) befestigt sind, das mit dem Pflugrahmen (2) verbunden ist.
